# DEMANDE DE BREVET EUROPEEN

(11) **EP 1 494 339 A1**
(43) Date de publication de la demande: **05.01.2005**
(21) Numéro de dépôt: 03014924.9
(22) Date de dépôt: 01.07.2003
(51) Int. Cl.: H02K 37/14, H02K 37/16, H02K 21/14, H02K 21/18

(54) **Moteur électromagnétique à deux sens de rotation**

(71) Demandeur: Microcomponents AG, 2540 Grenchen (CH)
(72) Inventeur: Vuilliomenet, Marc, 2400 Le Locle (CH); Taghezout, Daho, 1110 Morges (CH)
(74) Mandataire: Ravenel, Thierry Gérard Louis

(57) **Abrégé**

La présente invention concerne un moteur (1) n-phasé à deux sens de rotation présentant une structure à la fois compacte et peu coûteuse. Il est prévu notamment de réaliser le stator (2; 40) dans une forme essentiellement plane, tandis que des shunts magnétiques (24; 45) sont arrangés pour court-circuiter les oreilles polaires (13, 14, 16; 48, 49, 52, 53) du stator. Dans ce but, les oreilles polaires sont pourvues de trous (27) à l'intérieur desquels les shunts (24; 45) sont logés pour assurer la connexion mécanique et magnétique du moteur. Des bobines (20) sont disposées autour de pieds (25) de shunts avec leurs axes respectifs sensiblement parallèles à l'axe de rotation du rotor (17). De cette manière, le procédé d'assemblage du moteur selon la présente invention est également simple et peu coûteux dans la mesure où les shunts (24; 45) sont enfilés à travers les bobines (20) pour être connectés aux oreilles polaires correspondantes (13, 14, 16; 48, 49, 52, 53).

## Description

La présente invention concerne un moteur électromagnétique n-phasé, n étant supérieur à 1, à deux sens de rotation, ce moteur comportant un stator, définissant d'une part un trou statorique et d'autre part au moins trois pôles magnétiques, ainsi qu'un rotor à aimant permanent monté rotatif autour d'un axe par rapport au stator, dans le trou du stator.

Plus précisément, chacun des pôles magnétiques comprend un épanouissement polaire définissant partiellement le trou statorique, un bras polaire qui prolonge l'épanouissement et au moins une oreille polaire de fixation servant de contact magnétique à l'extrémité du bras polaire. Les épanouissements polaires sont séparés l'un de l'autre par des zones à haute réluctance magnétique.

Le moteur selon la présente invention comprend en outre au moins deux shunts magnétiques, qui relient l'un à l'autre deux des pôles magnétiques. Les shunts portent chacun des moyens pour engendrer dans les pôles auxquels ils sont associés un flux magnétique. Ainsi, chacun des shunts magnétiques forme, avec les pôles magnétiques auxquels il est associé et l'aimant permanent du rotor, un circuit magnétique.

La présente invention concerne plus particulièrement un tel moteur dans lequel les épanouissements polaires sont situés dans un même plan général sensiblement perpendiculaire à l'axe de rotation du rotor.

Dans la suite du présent texte, on désignera par "micromoteur" l'assemblage complet d'un dispositif d'entraînement, tel qu'un moteur comme celui désigné ci-dessus, dans un habillage du type boîtier destiné à être monté ultérieurement dans un dispositif plus complexe, tel qu'un tableau de bord de véhicule automobile par exemple.

Le moteur selon la présente invention présente une multitude d'applications possibles au sein d'un micromoteur comme, par exemple, l'entraînement d'une aiguille indicatrice de tableau de bord d'un véhicule.

### ARRIÈRE-PLAN TECHNOLOGIQUE

Un tel moteur est connu de l'art antérieur, par exemple du brevet EP 0 509 351, qui décrit une structure compacte de moteur destiné en particulier à être utilisé dans le cadre d'applications horlogères. Ce type de moteur comporte typiquement un stator réalisé en alliage fer-nickel, des bobines "de type horloger" étant disposées autour des shunts par enroulement de fils métalliques. Les shunts sont en outre rendus solidaires des oreilles des différents bras polaires par le biais de tourillons.

Ce type de moteur présente une structure plane et compacte permettant son utilisation dans un mouvement horloger. Toutefois, la compacité de la structure ne peut être obtenue qu'au prix d'une relative complexité d'assemblage des différents éléments constitutifs de ce moteur.

### RÉSUMÉ DE L'INVENTION

Un but de la présente invention est de pallier aux inconvénients de l'art antérieur susmentionnés en proposant une structure de moteur compacte conduisant à un bon rendement énergétique et dont l'assemblage est relativement simple.

Dans ce but, la présente invention concerne un moteur électromagnétique n-phasé du type indiqué plus haut, caractérisé par le fait que chacun des shunts est formé de deux pieds reliés par une partie médiane, ces deux pieds étant en contact avec les oreilles polaires du stator et s'étendant dans une direction transversale par rapport au plan général des épanouissements polaires. Par conséquent, la partie médiane de chacun des shunts est située en dehors du plan moyen des épanouissements polaires.

Grâce à ces caractéristiques, la mise au contact des shunts avec les oreilles polaires se fait de manière simple sans que des éléments spécifiques de fixation soient nécessaires.

En effet, les shunts peuvent être simplement déposés sur les oreilles polaires, en particulier dans le cas où le moteur est destiné à être logé dans un boîtier. Dans ce cas, le boîtier est typiquement formé d'un fond sur lequel est clipsé un couvercle, et on prévoit que le couvercle comporte des protubérances ou parties saillantes vers l'intérieur du boîtier et positionnées en regard de régions des shunts lorsque le moteur est assemblé dans le boîtier. Ainsi, lorsque le boîtier est fermé par son couvercle, les protubérances sont arrangées en butée contre les shunts, maintenant ces derniers en place au contact des oreilles polaires du stator.

De manière alternative, les pieds de shunts peuvent être collés au contact des oreilles polaires par un adhésif conducteur magnétique, ou encore soudés.

Les pieds de shunt peuvent reposer perpendiculairement par leurs extrémités respectives directement sur la surface des oreilles polaires. Selon un mode de réalisation préféré du moteur selon la présente invention, les pieds des shunts sont en outre, ou de manière alternative, liés aux oreilles polaires par emboîtement ou chassage de leurs extrémités respectives dans des trous adaptés des oreilles.

Selon une variante préférée, le moteur est réalisé avec des bobines du type galette, c'est-à-dire pour lesquelles le rapport entre le diamètre et l'épaisseur de l'enroulement est bien supérieur au rapport correspondant pour des bobines de type horloger. De telles bobines peuvent être fabriquées préalablement au montage du moteur et peuvent éventuellement être réalisées par un sous-traitant. En outre, ces bobines sont facilement enfilées sur un shunt, lors de l'assemblage du moteur, du fait de leur forme relativement rigide, voire autoportante, avec une ouverture préformée suivant leur axe de symétrie. Par conséquent, leur montage sur un shunt est nettement plus simple à réaliser qu'une opération d'enroulement d'un fil autour d'un shunt. Ainsi, le shunt remplit notamment une fonction de noyau pour la bobine qui lui est associée.

Selon une variante de réalisation, les bras polaires sont conformés de telle manière que les shunts ne se croisent pas. Ainsi, la hauteur des pieds de shunt est identique pour les différents shunts, ce qui permet de limiter l'encombrement du moteur dans la direction de l'axe de rotation du rotor. En outre, selon cette variante de réalisation, les shunts sont identiques, ce qui permet d'en réduire les coûts de fabrication.

Bien entendu, les bras polaires peuvent être conformés de toute autre manière par le fabricant pour tenir compte des contraintes géométriques liées à la disposition d'éléments supplémentaires à proximité du moteur.

La structure simplifiée du moteur selon la présente invention donne lieu à un procédé d'assemblage simplifié pour un micromoteur comprenant notamment un tel moteur disposé à l'intérieur d'un boîtier, comportant les étapes consistant à :
a) disposer le stator et le rotor dans le fond du boîtier,
b) déposer les bobines dans le fond du boîtier, sur les oreilles correspondantes du stator,
c) déposer les shunts magnétiques de telle manière que les deux pieds sont positionnés au contact d'oreilles polaires de stator, l'un des deux pieds traversant une des bobines, avant ou après avoir assemblé des éléments supplémentaires du moteur susceptibles d'être entraînés par le rotor, le cas échéant,
d) mettre le couvercle de boîtier en place pour assurer le maintien des shunts sur le stator.

On peut prévoir que les shunts soient maintenus en place au contact des oreilles du stator simplement par utilisation d'un adhésif conducteur magnétique, ou encore par chassage des pieds de shunts dans des trous adaptés des oreilles polaires et/ou dans des trous adaptés du boîtier.

### BRÈVE DESCRIPTION DES DESSINS

D'autres caractéristiques et avantages de la présente invention apparaîtront plus clairement à la lecture de la description détaillée qui suit, faite en référence aux dessins annexés donnés à titre d'exemples non limitatifs et dans lesquels:
- la figure 1a représente une vue en perspective depuis un premier côté du moteur selon un premier mode de réalisation de la présente invention;
- la figure 1b représente une vue en perspective depuis le côté opposé du moteur de la figure 1 a;
- la figure 2 représente une vue en perspective du moteur selon un second mode de réalisation de la présente invention;
- la figure 3a représente une vue en perspective du moteur selon un troisième mode de réalisation de la présente invention,
- la figure 3b représente une vue en perspective d'une variante de réalisation du moteur de la figure 3a, et
- la figure 4 représente une vue schématique en coupe d'un détail de construction selon une variante de réalisation préférée de la présente invention.

### DESCRIPTION DÉTAILLÉE

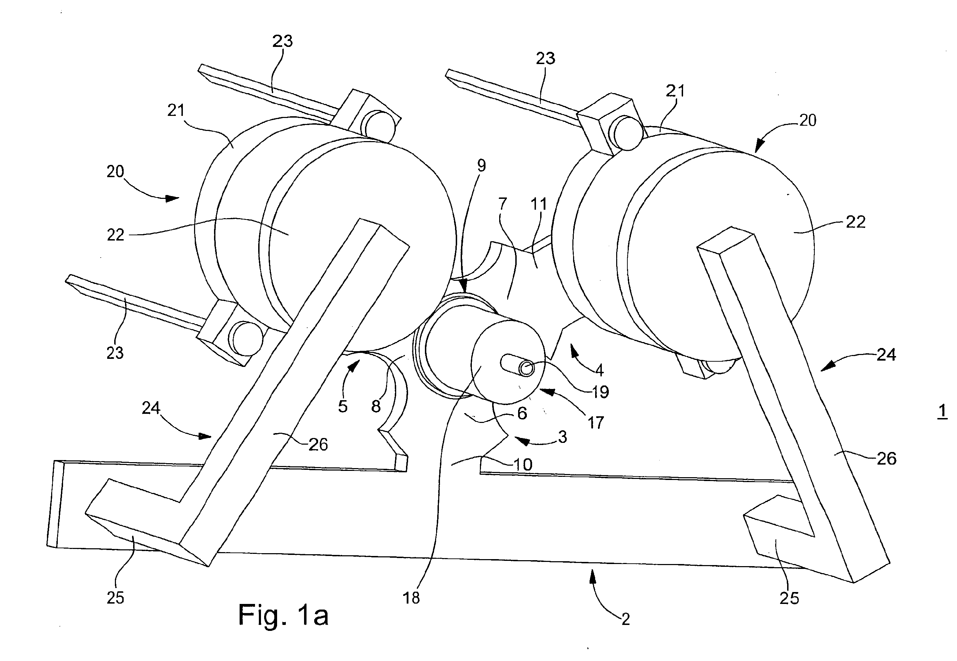

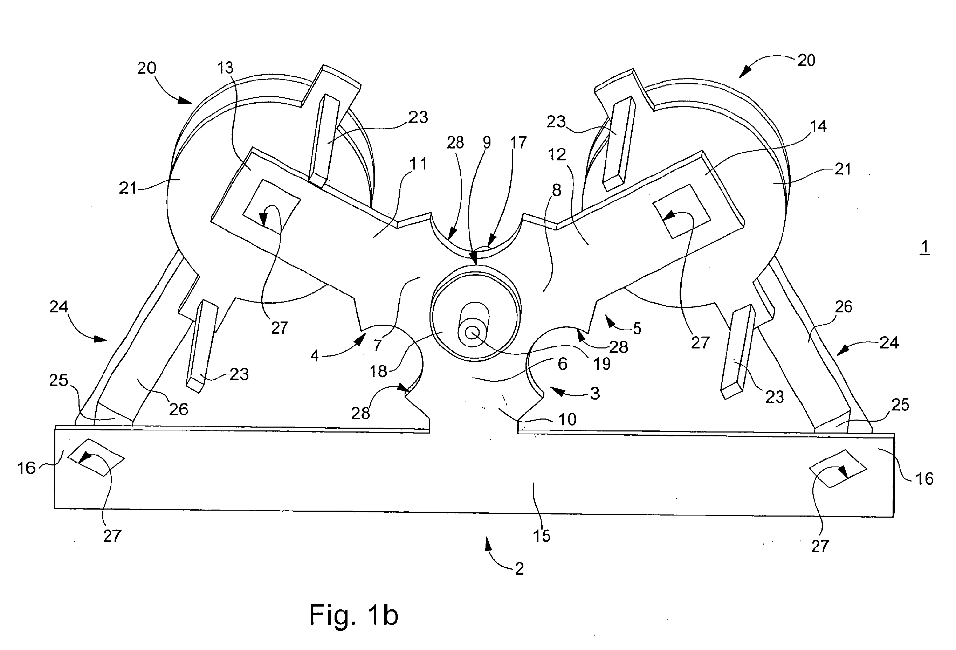

Les figures 1 a et 1 b représentent un moteur 1 biphasé comportant un stator 2 ayant trois pôles magnétiques 3, 4 et 5.

Chacun des pôles magnétiques comprend un épanouissement polaire respectif 6, 7 et 8, l'ensemble des épanouissements polaires définissant un trou statorique 9. Chacun des épanouissements est prolongé par un bras polaire respectif 10, 11 et 12. Chacun des bras polaires 11 et 12 se termine par une oreille polaire respective 13, 14, prévue pour fermer le circuit magnétique associé. Le bras 10 se termine par une extension transversale 15 présentant une oreille 16 à chacune de ses extrémités.

De manière préférée, au moins les épanouissements polaires 6, 7 et 8 du stator sont disposés sensiblement dans un même plan moyen. Il convient de noter que les stators représentés sur les différentes illustrations annexées présentent, de manière préférée mais non limitative, les bras polaires s'étendant entièrement dans un seul et même plan général.

Un rotor 17 comprenant un aimant bipolaire permanent 18, solidaire d'un pivot 19, est disposé dans le trou statorique 9. L'assemblage du pivot 19 avec l'aimant permanent peut être réalisé d'une multitude de façons connues de l'homme du métier, tel que par chassage, clipsage, surmoulage, micro-injection ou encore par bi-injection. Le pivot 19 peut également être constitué de deux parties indépendantes assemblées de part et d'autre de l'aimant permanent 18.

D'autre part, une bobine cylindrique 20, du type "galette" est disposée sur chacune des oreilles polaires 13 et 14, l'axe de chacune des bobines étant disposé de manière sensiblement perpendiculaire par rapport au plan moyen défini par les bras polaires 10, 11 et 12. Chaque enroulement de bobine est délimité par une plaque de base 21 et une plaque supérieure 22 en forme de disque, ces deux éléments formant les extrémités du corps de chaque bobine en prolongeant le noyau (non apparent) de celle-ci. En effet, de manière conventionnelle, chaque bobine 20 est préférablement formé d'un corps creux allongé et délimité par les plaques de base et supérieure, un fil de cuivre étant enroulé autour du noyau. Deux plots de connexion 23 sont en outre portés par chaque plaque de base 21 et sont prévus pour permettre l'alimentation des bobines 20 en courant électrique.

De manière conventionnelle, on peut prévoir de souder les extrémités libres des plots de connexion 23 directement sur un circuit imprimé (non représenté) sur lequel le moteur 1 est monté ultérieurement.

Deux shunts magnétiques 24 relient, d'une part, une première oreille 16 du bras polaire 15 et l'oreille 13 et, d'autre part, la seconde oreille 16 du bras polaire 15 et l'oreille 14, de façon à définir deux circuits magnétiques.

Les shunts 24, qui sont similaires suivant ce mode de réalisation préféré de la présente invention, présentent chacun une forme générale de U. En effet, chacun des shunts 24 comporte deux pieds 25, distants l'un de l'autre et sensiblement parallèles entre-eux et, une partie médiane 26 disposée perpendiculairement aux pieds assurant leur connexion mécanique.

Un pied 25 de chacun des shunts 24 est arrangé au travers d'une ouverture de forme correspondante de l'une des bobines 20 (non visible sur les figures), sensiblement le long de son axe.

Suivant la forme représentée ici à titre d'exemple non limitatif, les pieds 25 présentent une section de forme sensiblement carrée. On constate en particulier sur la figure 1 b que les oreilles 13, 14 et 16 comportent des trous 27 présentant chacun une section similaire à la section d'un pied 25, de sorte que les pieds 25 peuvent être logés dans les trous 27.

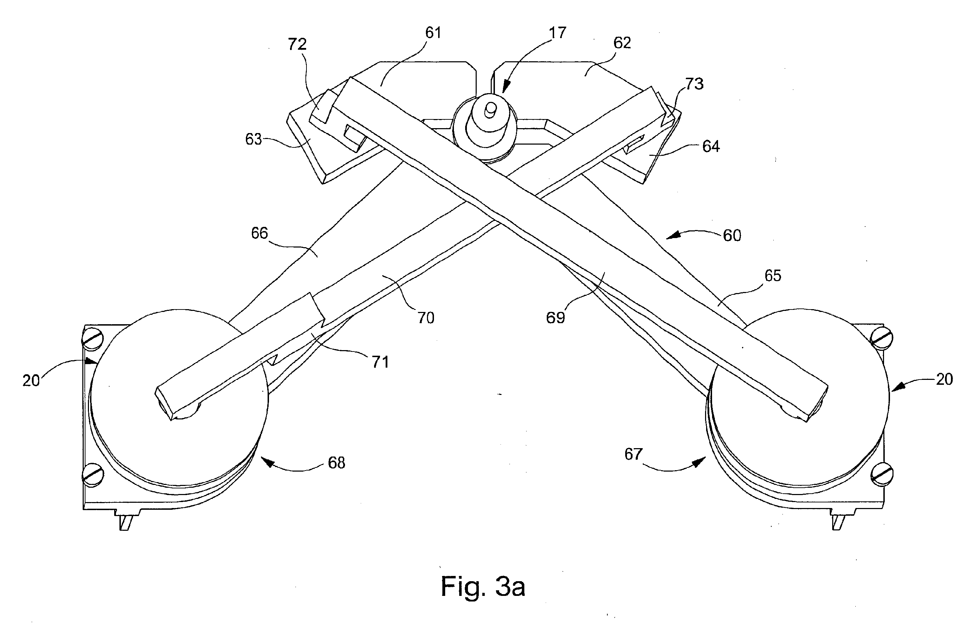

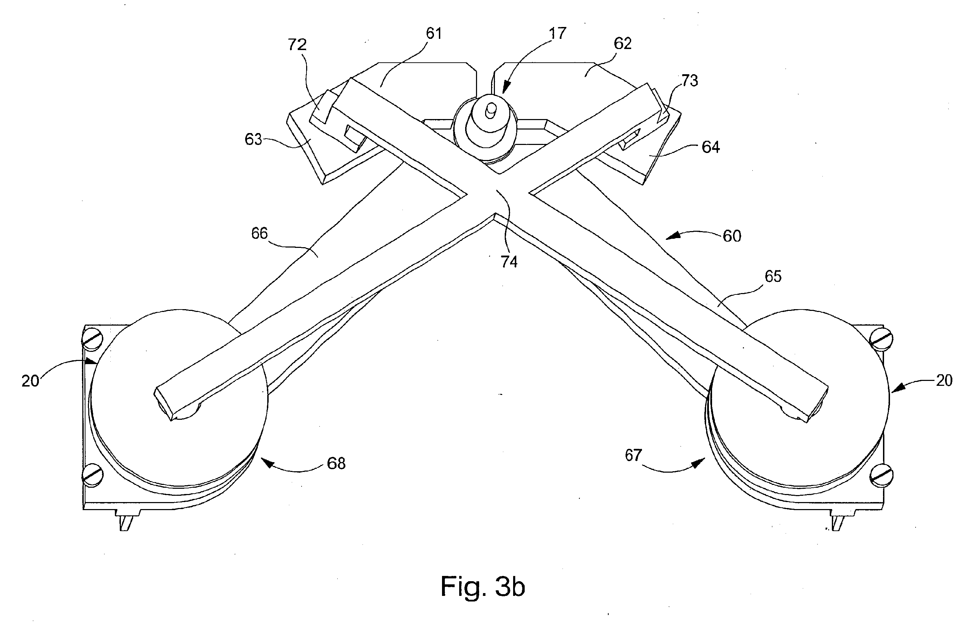

Les sections des pieds 25 et des trous 27 peuvent être adaptées pour coopérer de telle façon que les pieds 25 sont logés dans les ouvertures 27 et y sont ensuite maintenus par friction. De manière préférée, on prévoit en outre des épaulements dans la région des extrémités des pieds qui seront décrits plus en détail en relation avec la description détaillée de la figure 3.

On peut noter en outre que, de manière conventionnelle, les épanouissements polaires 6, 7 et 8 sont séparés par des zones à haute réluctance magnétique 28, représentées ici sous la forme d'isthmes. On peut prévoir alternativement une interruption de matière entre les épanouissements plutôt que des isthmes.

De même, on peut noter que la géométrie représentée sur les figures 1 a et 1 b, à titre non limitatif, permet de dégager un espace d'accès au rotor pour le montage ultérieur de rouages, pour transmettre le mouvement de rotation du rotor à un élément indicateur, par exemple.

La structure simplifiée, par rapport aux structures de l'art antérieur, et qui vient d'être décrite permet au fabricant de tels moteurs de recourir à des tolérances sur les dimensions des différents éléments constitutifs du moteur supérieures aux tolérances de l'art antérieur.

Cette caractéristique avantageuse permet par conséquent de réduire les coûts de fabrication, dans la mesure où il devient possible d'utiliser un alliage fer-silicium plutôt que fer-nickel, la préparation du premier étant moins coûteuse que celle du second. En effet, l'alliage fer-silicium est utilisé en quantités importantes dans l'industrie des moteurs contrairement à l'alliage fer-nickel, ce qui entraîne des coûts finaux plus faibles pour le premier.

En outre, un traitement thermique est nécessaire pour fournir à ces alliages les propriétés magnétiques recherchées. En ce qui concerne l'alliage fer-nickel, le traitement thermique doit être effectué après découpage des éléments constitutifs du moteur, car la dureté de l'alliage après le traitement thermique ne permet plus d'atteindre une bonne précision de découpage. Cette contrainte représente un facteur de coût important dans la mesure où le traitement thermique est généralement sous-traité par le fabricant de moteurs.

En ce qui concerne l'alliage fer-silicium, sa dureté après traitement thermique autorise un découpage ultérieur. Par conséquent, cet alliage peut être traité thermiquement directement par son producteur avant qu'il ne soit fourni au fabricant de moteur, par ce qu'on appelle communément un "fully process".

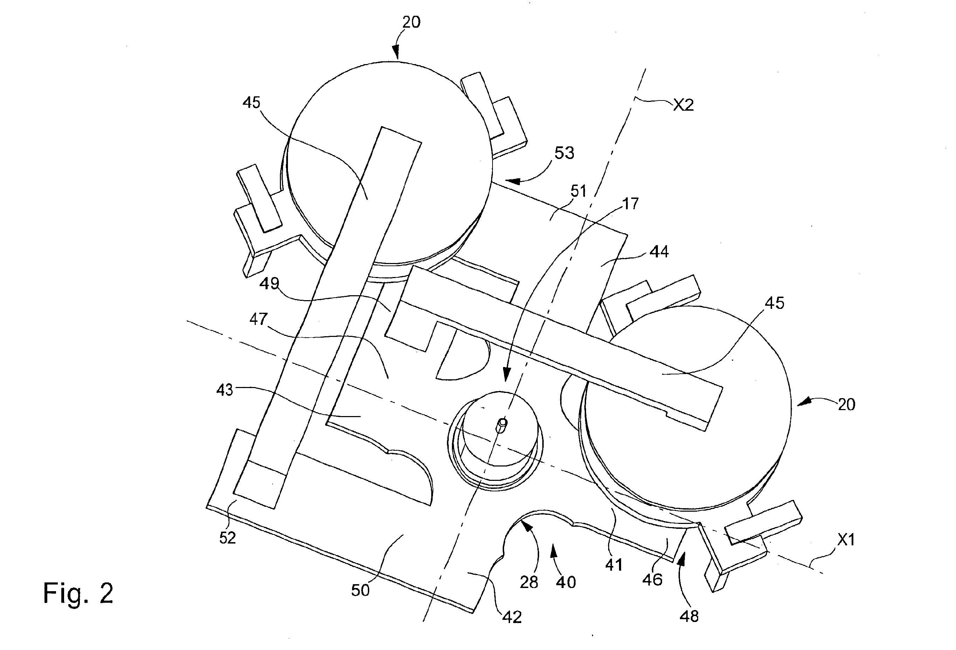

La figure 2 représente une vue en perspective d'un moteur selon un second mode de réalisation préféré de la présente invention. Les éléments déjà décrits repris à l'identique portent les mêmes références numériques que sur les figures 1 a et 1 b.

Dans ce second mode de réalisation, le stator 40 comporte quatre pôles magnétiques comprenant chacun un bras polaire respectif, 41 à 44, ces derniers étant reliés deux à deux par des shunts magnétiques 45.

Ainsi, du point de vue magnétique le moteur représenté sur la figure 2 est similaire au moteur décrit dans le brevet EP 0 509 351, précédemment cité, auquel l'homme du métier pourra se reporter pour les détails concernant cet aspect dans la mesure où il ne sera pas développé davantage ici.

Les shunts 45 sont similaires aux shunts 24 décrits en relation avec les figures 1a et 1b.

On peut noter que les bras polaires 41 à 44 sont conformés d'une manière particulière non limitative. En effet, les bras 41 et 43 comportent chacun une portion distale 46, 47 repliée à 90 degrés, par rapport à un premier axe X1 passant par les milieux respectifs des deux épanouissements polaires correspondants, et portant une oreille polaire 48, 49. Les oreilles polaires 48 et 49 sont ainsi arrangées du même côté du rotor 17, de telle manière que le shunt magnétique 45 ne soit pas situé trop proche de ce dernier.

D'autre part, les bras polaires 42 et 44 comportent également chacun une portion distale 50, 51 repliée à 90 degrés, par rapport à un second axe X2 passant par les milieux respectifs des deux épanouissements polaires correspondants, et portant une oreille polaire 52, 53. Les portions distales 50 et 51 présentent une longueur plus importante que les portions distales 46 et 47, de telle manière que les oreilles polaires 52 et 53 soient situées au-delà de la portion distale 47 dans la direction de l'axe X1.

Grâce à cette caractéristique particulière, les shunts 45 ne se croisent pas comme cela apparaît clairement de la figure 2, ce qui permet notamment d'optimiser l'épaisseur du moteur.

De plus, chacun des shunts 45 peut être réalisé sous une forme simple de U tel que mentionné plus haut sans qu'il soit nécessaire de prévoir un décrochement dans la direction de l'axe de rotation du rotor.

En outre, les dimensions respectives des bras polaires 41 à 44 peuvent être adaptées de telle manière que les deux shunts 45 sont identiques, tel que représenté de façon non limitative sur la figure 2, ce qui permet de diminuer les coûts de fabrication.

De même que pour le premier mode de réalisation, on a représenté des isthmes 28 pour séparer les épanouissements polaires les uns des autres. Une variante de réalisation dans laquelle les quatre pôles magnétiques se présentent comme quatre éléments séparés est bien entendu envisageable sans sortir du cadre de la présente invention. En outre, la structure représentée sur la figure 2 permet aisément une réalisation à base d'un alliage fer-silicium, tel que décrit plus haut, en procurant tous les avantages déjà énumérés.

La figure 3a représente une configuration différente d'un moteur, dont le stator 60 comporte quatre pôles magnétiques, selon un troisième mode de réalisation préféré de la présente invention. Le fonctionnement de ce moteur est similaire au fonctionnement de celui qui vient d'être décrit en relation avec la figure 2 du point de vue magnétique.

Le moteur représenté sur la figure 3a répond à des exigences différentes en matière d'encombrement par rapport à ce qui a été décrit précédemment. En effet, la structure de la figure 3a est présentée à titre d'exemple lorsque la forme du moteur doit être adapté à des contraintes d'encombrement imposés par des éléments extérieurs au moteur en tant que tel. Cette situation peut se présenter, par exemple, lorsqu'un nouveau moteur suivant la présente invention doit être intégré dans un boîtier existant qui ne peut pas être modifié pour des raisons annexes, notamment pour des raisons de coûts.

Dans la structure représentée, les deux bobines 20 sont disposées à distance du rotor 17. Ainsi, on constate que deux bras polaires 61, 62 sont relativement courts, les oreilles polaires 63, 64 correspondantes étant proches du rotor. Les deux autres bras polaires 65, 66 sont plus longs, les oreilles polaires 67, 68 correspondantes étant relativement éloignées du rotor.

Les bobines sont agencées sur les oreilles polaires 67, 68 les plus éloignées du rotor et comportent des ouvertures (non visibles) suivant leurs axes pour laisser passer chacune un pied de shunt magnétique 69 et 70, tel que décrit précédemment.

On constate que, dans cette configuration des bras polaires, les shunts se croisent en superposition pour relier les oreilles magnétiques qui leur sont associées en reliant chacun un bras polaire court avec le bras polaire long non-adjacent. Par conséquent, les deux shunts 69 et 70 ne peuvent pas être identiques comme c'était le cas dans les modes de réalisation précédents. En effet, le premier shunt 69 présente une forme générale de U, comme mentionné plus haut, tandis que le second shunt présente un décrochement 71 dans sa partie médiane.

Grâce à ce décrochement 71, l'encombrement du moteur suivant la direction de l'axe de rotation du rotor peut être similaire à celui des moteurs selon les modes de réalisations précédents.

Le présent mode de réalisation est moins avantageux du point de vue de l'optimisation des coûts de fabrication des shunts magnétiques, dans la mesure où les deux shunts ne sont plus identiques et doivent être fabriqués indépendamment l'un de l'autre. Cette solution peut tout de même rester globalement intéressante si on considère les contraintes extérieures évoquées plus haut, tel que la nécessité de conserver une forme de boîtier existante ou de tenir compte de l'encombrement des rouages.

Les shunts 69 et 70 présentent une caractéristique structurelle supplémentaire permettant d'améliorer la stabilité du contact avec le stator. En effet, chacun des shunts magnétiques 69, 70 comporte un épaulement 72, respectivement 73, au niveau de son pied relié au bras polaire court 61, respectivement 62.

L'extrémité de chacun des pieds de shunt coopère avec un trou adapté de l'oreille polaire correspondante comme décrit précédemment. Ainsi, lorsque les shunts 69 et 70 sont mis en place sur le stator 60, les épaulements 72 et 73 sont disposés en butée contre les oreilles 63 et 64, de façon à améliorer le passage du flux magnétique ainsi que la stabilité de l'assemblage obtenu. Bien entendu, on peut prévoir de manière similaire des épaulements sur les pieds des shunts traversant les bobines 20 si l'espace situé à l'intérieur de leurs ouvertures axiales respectives le permet.

La figure 3b représente une vue en perspective d'une variante de réalisation du moteur décrit en relation avec la figure 3a, dans laquelle les deux shunts magnétiques sont réalisés d'une seule pièce formant un élément en croix 74. L'élément en croix 74 est préférablement réalisé par un procédé de moulage par injection conventionnel.

La variante de la figure 3b présente ainsi une stabilité mécanique améliorée par rapport à la première variante de la figure 3a. Toutefois, le rendement magnétique de ce moteur est légèrement inférieur à celui du moteur de la figure 3a dans la mesure où les différents circuits magnétiques mis en jeu ne sont pas indépendants les uns des autres.

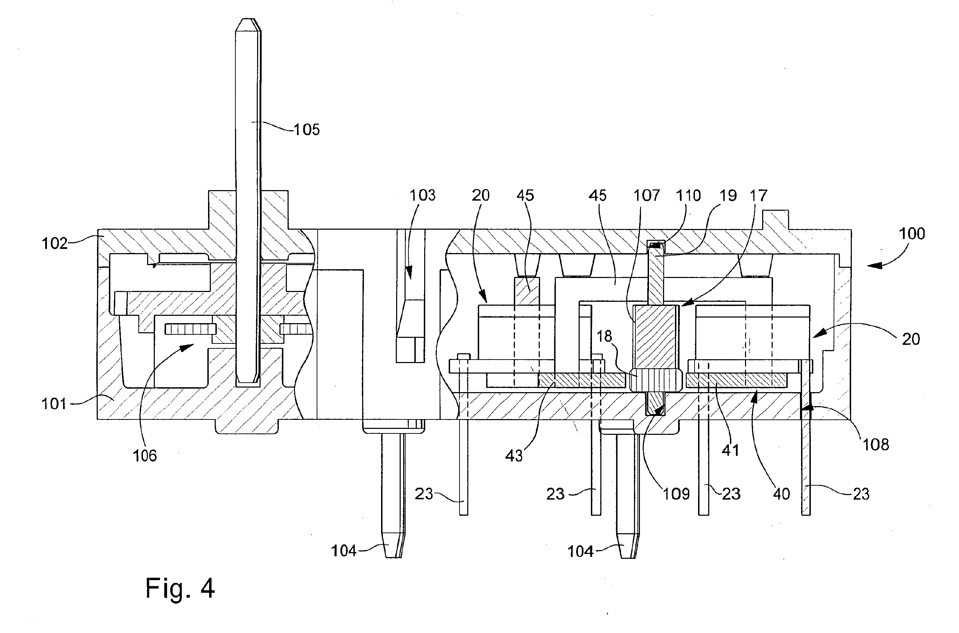

La figure 4 représente une vue schématique en coupe partielle d'un détail de construction du moteur lorsqu'il est monté dans un boîtier 100, de manière conventionnelle, pour former un micromoteur. Le boîtier est typiquement réalisé en matière plastique et, selon une variante préférée de la présente invention qui peut être appliquée à n'importe lequel des modes de réalisation précédemment décrits, il comprend des moyens spécifiquement destinés à assurer un bon maintien des shunts magnétiques au contact des oreilles polaires.

La représentation de la figure 4 correspond à la vue en coupe selon la ligne IV-IV du moteur de la figure 2, lorsque celui-ci est logé dans le boîtier 100.

Le boîtier est composé d'un fond 101 fermé par un couvercle 102 par clipsage, à l'aide d'une pluralité de pattes de clipsage 103 dont une seule est représentée sur la figure 4. Le fond du boîtier comporte une pluralité de pieds 104 destinés à être enfichés dans des trous d'un circuit imprimé (non représenté), par exemple, dans le but de maintenir et positionner le boîtier 100.

Dans l'application présentée ici à titre d'exemple non limitatif, le micromoteur est destiné à entraîner une aiguille indicatrice de tableau de bord d'un véhicule. Ainsi, pour faciliter la compréhension, on a représenté de manière schématique un axe d'entraînement 105 de l'aiguille indicatrice (non représentée). L'axe d'entraînement 105 est lui-même entraîné en rotation, à partir du moteur, par le biais d'un jeu de rouages 106 conventionnels engrenant avec une denture 107 du rotor 17. Les rouages 106 ne seront pas décrits plus en détail car l'homme du métier ne rencontrera pas de difficulté particulière pour les mettre en oeuvre.

Le fond 101 et le couvercle 102 du boîtier sont moulés directement en fonction de la forme du moteur qui doit y être placé. En particulier, des passages 108 sont prévus dans le fond pour permettre la sortie des plots de connexion 23 des bobines 20, ainsi que des trous borgnes 109, 110 pour positionner le pivot 19 du rotor 17, dans le fond et dans le couvercle.

En outre, on prévoit préférablement un relief (non visible) sur le fond 101 du boîtier pour positionner les éléments constitutifs du stator 40.

Du fait de ces caractéristiques structurelles, le moteur est assemblé dans son boîtier de manière très simple. Les éléments constitutifs du stator 40 sont déposés sur le fond 101 ainsi que le rotor 17, son pivot 19 étant engagé dans le trou borgne 109 du fond. Les bobines 20 sont déposées sur les oreilles polaires 48 et 53, leurs plots de connexion 23 étant engagés au travers des passages 108. Les deux shunts magnétiques 45 sont alors mis en place, leurs pieds respectifs étant logés dans des trous correspondants prévus dans les oreilles polaires respectives 49 et 52, sous l'effet d'une pression dirigée suivant l'axe de rotation du rotor.

Les éléments supplémentaires constitutifs du micromoteur, tel que les rouages 106, sont ensuite disposés à l'intérieur du boîtier avant que le couvercle 102 ne soit clipsé sur le fond 101 pour fermer le boîtier.

On constate, sur la figure 4, que le couvercle 102 est pourvu de protubérances 111 ménagés en regard des shunts magnétiques 45. Ces protubérances 111 sont préférablement moulés directement avec le couvercle et permettent de maintenir les éléments constitutifs du moteur solidaires les uns des autres. Il est en effet apparent que lorsque le couvercle 102 est clipsé sur le fond 101, les protubérances 111 sont disposées en butée contre les shunts magnétiques 45, ces derniers devenant ainsi verrouillés dans la direction de l'axe de rotation du rotor.

On peut également prévoir, en alternative à ce qui vient d'être décrit, que les oreilles polaires ne comportent pas de trou comme mentionné plus haut, les shunts étant alors simplement posés, collés ou soudés sur les oreilles.

Une variante particulièrement intéressante lorsque les shunts sont simplement déposés sur les oreilles polaires consiste à prévoir des évidements dans le couvercle 102 en remplacement des protubérances 111. Les dimensions de ces évidements (non représentés), obtenus directement lors du moulage du couvercle 102, seraient adaptées aux dimensions des shunts de manière à ce que ces derniers soient chassés dans le couvercle avant sa mise en place sur le fond 101. Lors de l'étape de fermeture du boîtier, les pieds de shunts se trouvent ainsi justement positionnés par rapport aux oreilles polaires, pour finir à leur contact une fois le couvercle clipsé sur le fond.

La description qui précède correspond à des modes de réalisation particuliers et ne saurait en aucun cas être considérée comme limitative, en ce qui concerne plus particulièrement la forme décrite et représentée pour les différents éléments structurels composant le moteur ainsi que leurs emplacements respectifs.

Les applications possibles pour un tel dispositif de commande sont très nombreuses puisque la présente invention peut être mise en oeuvre pour tout type d'appareil électronique nécessitant un moteur pour entraîner un élément mobile, tel qu'un organe indicateur analogique.

## Revendications

1. Moteur (1) électromagnétique n-phasé, n étant supérieur à 1, à deux sens de rotation, ce moteur comportant :
- un stator (2; 40) définissant d'une part un trou statorique (9) et d'autre part au moins trois pôles magnétiques (3, 4, 5), chacun de ces pôles comprenant un épanouissement polaire (6, 7, 8) définissant partiellement ledit trou statorique, un bras polaire (10 à 12; 41 à 44) qui prolonge ledit épanouissement et au moins une oreille polaire (13, 14, 16; 48, 49, 52, 53) de fixation servant de contact magnétique à l'extrémité dudit bras polaire, lesdits épanouissements polaires étant séparés l'un de l'autre par des zones (28) à haute réluctance magnétique,
- un rotor (17) à aimant permanent (18) monté rotatif autour d'un axe par rapport au dit stator (2; 40) dans ledit trou statorique (9),
- au moins deux shunts magnétiques (24; 45) qui relient l'un à l'autre deux desdits pôles magnétiques,
- des moyens (20) montés sur chaque shunt magnétique (24; 45) pour engendrer dans les pôles auxquels ils sont associés un flux magnétique,
- chacun desdits shunts (24; 45) formant avec lesdits pôles magnétiques et l'aimant permanent du rotor un circuit magnétique fermé,
- lesdits épanouissements polaires (6, 7, 8) étant situés dans un même plan général sensiblement perpendiculaire à l'axe de rotation dudit rotor (17),
**caractérisé en ce que** chacun desdits shunts (24; 45) présente deux pieds (25) en contact avec lesdites oreilles polaires (13, 14, 16; 48, 49, 52, 53) du stator par leurs extrémités libres respectives et reliés par une partie médiane (26), lesdits pieds (25) s'étendant dans une direction transversale par rapport au dit plan général.

2. Moteur selon la revendication 1, **caractérisé en ce qu'**au moins l'un desdits pieds (25) de chacun desdits shunts (24; 45) est sensiblement perpendiculaire au dit plan général.

3. Moteur selon la revendication 1 ou 2, **caractérisé en ce que** lesdits moyens pour engendrer un flux magnétique comprennent au moins une bobine (20) du type galette disposée autour d'un pied (25) de chacun desdits shunts (24; 45).

4. Moteur selon la revendication 3, **caractérisé en ce que** chacune desdites bobines (20) présente un axe de symétrie disposé perpendiculairement au dit plan général.

5. Moteur selon les revendications 2 et 3 ou 2 et 4, **caractérisé en ce que** lesdites bobines (20) sont respectivement enfilées autour dudit pied (25) de chacun desdits shunts (24; 45) qui est perpendiculaire au dit plan général.

6. Moteur selon l'une quelconque des revendications précédentes, lorsque ledit stator (40) comprend au moins quatre pôles magnétiques, lesdits shunts (45) reliant l'un à l'autre deux desdits pôles magnétiques non-adjacents pour former avec lesdits pôles et l'aimant permanent (18) dudit rotor (17) un circuit magnétique découplé magnétiquement des autres circuits magnétiques du moteur, **caractérisé en ce que** lesdits bras polaires (41 à 44) sont conformés de telle manière que les shunts (45) ne se croisent pas.

7. Moteur selon la revendication 6, **caractérisé en ce que** lesdites parties médianes (26) sont sensiblement situées dans un même plan parallèle au dit plan général.

8. Moteur selon l'une des revendications 1 à 5, lorsque ledit stator (60) comprend au moins quatre pôles magnétiques, lesdits shunts (69, 70) reliant l'un à l'autre deux desdits pôles magnétiques non-adjacents pour former avec lesdits pôles et l'aimant permanent (18) dudit rotor (17) un circuit magnétique, **caractérisé en ce que** lesdits bras polaires (61, 62, 65, 66) sont conformés de telle manière que les shunts (69, 70) se croisent.

9. Moteur selon la revendication 8, **caractérisé en ce que** lesdits shunts (74) sont réalisés d'une seule pièce.

10. Moteur selon l'une quelconque des revendications précédentes, **caractérisé en ce qu'**au moins l'une desdites deux oreilles (13, 14, 16; 48, 49, 52, 53) associées à chacun desdits shunts (24; 45) comprend un trou (27) pour loger ladite extrémité libre dudit pied (25) correspondant.

11. Moteur selon la revendication 10, **caractérisé en ce que** l'autre desdites deux oreilles (13, 14, 16; 48, 49, 52, 53) comprend également un trou (27) pour loger ladite extrémité libre de l'autre pied (25) dudit shunt (24; 45) associé.

12. Micromoteur comportant un moteur (1 ) selon l'une quelconque des revendications précédentes, **caractérisé en ce qu'**il comporte un boîtier (100) dans lequel est logé ledit moteur (1), le boîtier comprenant un fond (101) fermé par un couvercle (102), ce dernier présentant des protubérances (111) prévues pour être arrangées contre au moins une région desdits shunts (45) lorsque ledit boîtier (100) est fermé de façon à maintenir lesdits shunts en appui contre lesdites oreilles (48, 49, 52, 53) du stator (40).

13. Procédé d'assemblage d'un micromoteur selon la revendication 12, **caractérisé en ce qu'**il comporte les étapes consistant à :
a) disposer le stator (2; 40) et le rotor (17) dans ledit fond (101) du boîtier (100),
b) déposer lesdites bobines (20) dans ledit fond (101) du boîtier, sur lesdites oreilles polaires (13, 14, 16; 48, 49, 52, 53) correspondantes du stator,
c) déposer lesdits shunts magnétiques (24; 45) de telle manière que lesdits deux pieds (25) sont positionnés au contact de deux oreilles polaires (13, 14, 16; 48, 49, 52, 53), l'un desdits deux pieds (25) traversant une desdites bobines (20), avant ou après avoir assemblé des éléments (106) supplémentaires du moteur susceptibles d'être entraînés par ledit rotor (17), le cas échéant,
d) mettre ledit couvercle (102) de boîtier en place pour assurer le contact desdits shunts (24; 45) sur ledit stator (2; 40).

14. Procédé selon la revendication 13, **caractérisé en ce qu'**un adhésif est disposé entre lesdites oreilles polaires (13, 14, 16; 48, 49, 52, 53) et lesdits pieds (25) desdits shunts (24; 45) avant que ces derniers ne soient disposés au contact desdites oreilles polaires.
